# EUROPEAN PATENT SPECIFICATION

(11) **EP 1 410 931 B1**
(45) Date of publication and mention of the grant of the patent: **12.04.2006**
(21) Application number: 03023250.8
(22) Date of filing: 14.10.2003
(51) Int. Cl.: B60H 1/24, H01Q 1/32

(54) **Air vent having a electronic component embedded therein**
Belüftungsdüse mit integriertem elektronischen Bauteil
Organe d'aération avec composant électronique intégré

(30) Priority: 16.10.2002 DE 20215898 U
(43) Date of publication of application: 21.04.2004
(73) Proprietor: TRW Automotive Electronics & Components GmbH & Co. KG, 67677 Enkenbach/Alsenborn (DE)
(72) Inventor: Lauhoff, Dirk, 67659 Kaiserslautern (DE)
(74) Representative: Degwert, Hartmut

(56) References cited:
- EP-A- 0 632 519
- DE-A- 4 215 659
- DE-A- 19 962 736
- FR-A- 2 695 257

## Description

The present invention relates to an air vent according to the preamble of claim 1.

The present invention further relates to an air vent according to the preamble of claim 2.

In air vents in the automotive sector, an antenna or a sensor may be mounted outside the vehicle onto the frame of the air vent to avoid radiation shielding by the car body. A connection cable for the antenna or sensor is passed through an opening in the frame and the opening is sealed. Subsequently, a connection plug is attached to the cable.

Conventionally, such an antenna (that may e.g. be used for emergency calls) is attached to the frame of the air vent by frame-integrated holding means (clips or tabs) or by separate clips. An assembly consisting of the air vent and the antenna with connection cable and plug is then mounted onto the vehicle.

This known technology entails high costs because of complex tooling for fastening and tolerance compensation with aligning elements such as, for example, spring shackles, hooks, undercuts, contact ribs or support ribs. Special tools are required for other fastening elements such as, for example, screws, rivets, clips, etc. The assembly costs are increased by the requirement of a tolerance compensation for the separate parts. Finally the electronic or electric component is exposed to environmental influence and, in particular, to humidity.

DE-A-199 62 736 discloses an air vent to be mounted on a vehicle body with a frame molded of a plastic material. An antenna is mechanically linked to the frame.

EP-A-0 632 519 discloses an antenna assembly attached to the window of a vehicle. The antenna assembly comprises a radiating member and a support base to which the radiating member is secured. The antenna assembly protrudes from the vehicle window.

DE-A-42 15 659 shows an antenna which is embedded in the bumper of a vehicle.

According to the present invention, the air vent has a frame molded of a plastic material and the at least one electric or electronic component is embedded and over-molded in the plastic material. By simply embedding in and over-molding the component with the frame, a number of advantages is achieved over the prior art. Among these are the following;
assembly costs are reduced
tolerance problems are avoided
the sealing on the vehicle body is improved
the component is safely attached to the frame of the air vent
the number of parts is reduced
there is a quality improvement through reduction of the production steps or sources of error
fewer tools can be used
the component is sealed in the plastic material and thus well protected from deterioration by environmental influence.

According to a first aspect of the present invention, the antenna body is integrated into the frame of the air vent by means of injection molding. According to a second aspect of the present invention, a frame core is provided that has a recess for accommodation of the antenna. The frame core with the antenna body are then taken to a mold and over-molded with plastic material, thereby incorporating the antenna in the frame of the air vent. Other components such as an antenna micro-strip, circuit parts and connectors may be incorporated in the frame of the air vent simultaneously and in a similar manner.

A preferred embodiment of the invention will now be described with reference to the attached drawing wherein
- Fig 1: is a perspective view of an air vent to be mounted on a vehicle body;
- Fig. 2: is a cross-section along line II-II in Fig. 1; and
- Fig. 3: a similar cross-section of an alternative embodiment.

The air vent has a generally rectangular frame 10 with two pairs of opposed frame sections. The longer ones 10a, 10b of opposed frame sections are spanned by a plurality of ribs 11. The frame with the ribs 11 is injection-molded from a plastic material. An antenna is incorporated in the frame. Specifically, the antenna has a generally T-shaped metallic body 12 with a first branch 12a that spans the frame sections 10a, 10b centrally of the frame and a second branch 12b perpendicular to the first branch 12a and extending along frame section 12b.

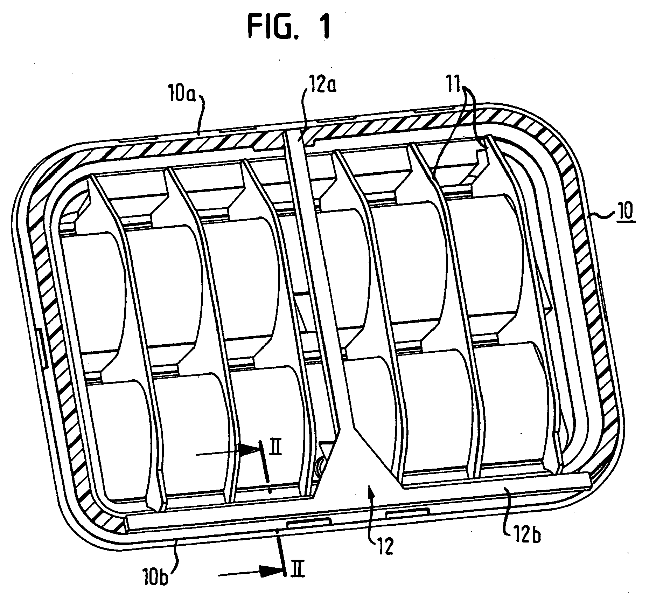

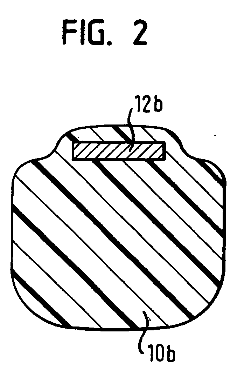

In Fig. 1, the antenna body appears as raised above the outer surface of the vent frame and covered with plastic material. As seen in Fig. 2, the antenna body is in fact embedded in the body of the vent frame. This is achieved by placing the antenna body in a cavity of an injection mold and injecting the plastic material around the antenna body.

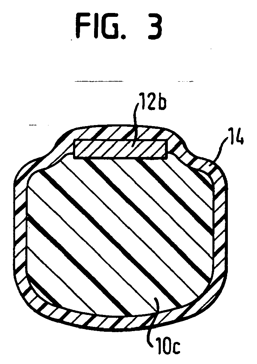

In the alternative embodiment of Fig. 3, a frame core 10c has a locating recess for accommodation of the antenna body, the frame core 10c with the antenna body are taken to a mold cavity and both are over-molded with plastic material, forming an outer layer 14 of the frame, whereby the antenna is incorporated in the frame of the air vent.

## Claims

1. An air vent to be mounted on a vehicle body, the air vent having a frame molded of a plastic material and an antenna, **characterized in that** the antenna is integrated into the plastic material of the frame by injection-molding.

2. An air vent to be mounted on a vehicle body, the air vent having a frame with a frame core molded of a plastic material and an antenna, **characterized in that** the antenna is accommodated in a locating recess of the frame core and the frame core with the antenna is over-molded with plastic material.

3. The air vent according to claim 1 or claim 2, wherein in addition to the antenna an electric or electronic component of one of the following is provided:
- an antenna microstrip
- a connection plug
- a sensor.

4. The air vent of claim 3, wherein the frame is generally rectangular with a plurality of ribs spanning two opposed frame sections, and the antenna consists of a T-shaped metallic body with a first branch spanning the opposed frame sections and a second branch extending along one of the opposed frame sections.

## Patentansprüche

1. Entlüftungsgitter zur Montage an einer Fahrzeugkarosserie, wobei das Entlüftungsgitter einen aus Kunststoff geformten Rahmen und eine Antenne hat, **dadurch gekennzeichnet, dass** die Antenne durch Spritzgießen in den Kunststoff des Rahmens integriert ist.

2. Entlüftungsgitter zur Montage an einer Fahrzeugkarosserie, wobei das Entlüftungsgitter einen Rahmen mit einem aus Kunststoff geformten Rahmenkern und eine Antenne hat, **dadurch gekennzeichnet, dass** die Antenne in einer Fixierungsausnehmung des Rahmenkerns aufgenommen ist und der Rahmenkern mit der Antenne mit Kunststoff umspritzt bzw. umgossen ist.

3. Entlüftungsgitter nach Anspruch 1 oder Anspruch 2, bei dem zusätzlich zur Antenne ein elektrisches oder elektronisches Bauteil vorgesehen ist, das eines der folgenden ist:
- Streifenantenne
- Anschlussstecker
- Sensor.

4. Entlüftungsgitter nach Anspruch 3, bei dem der Rahmen insgesamt rechteckig ist und mehrere Rippen aufweist, die zwei einander gegenüberliegende Rahmenabschnitte überspannen, und die Antenne aus einem T-förmigen, metallischen Körper besteht, dessen erster Zweig die einander gegenüberliegenden Rahmenabschnitte überspannt und dessen zweiter Zweig sich längs eines der einander gegenüberliegenden Rahmenabschnitte erstreckt.

## Revendications

1. Grille d'aération pour le montage sur la carrosserie d'un véhicule, la grille d'aération ayant un cadre moulé de matière plastique et une antenne, **caractérisée en ce que** l'antenne est intégrée dans la matière plastique du cadre par moulage par injection.

2. Grille d'aération pour le montage sur la carrosserie d'un véhicule, la grille d'aération ayant un cadre avec un noyau de cadre moulé de matière plastique, et une antenne, **caractérisée en ce que** l'antenne est logée dans une empreinte de fixation du noyau de cadre et le noyau de cadre ainsi que l'antenne sont surmoulés avec de la matière plastique.

3. Grille d'aération selon la revendication 1 ou la revendication 2, dans laquelle il est prévu, en plus de l'antenne, un composant électrique ou électronique parmi les suivants:
- une antenne à rubans
- une fiche de raccordement
- un capteur.

4. Grille d'aération selon la revendication 3, dans laquelle le cadre est généralement rectangulaire avec une pluralité de nervures recouvrant deux sections opposées du cadre, et l'antenne est composée d'un corps métallique en forme de T ayant une première branche recouvrant les sections opposées du cadre et une deuxième branche s'étendant le long d'une des sections opposées du cadre.
